## Europäisches Patentamt

## European Patent Office

## Office européen des brevets

(19)

(11) Veröffentlichungsnummer: **0 218 054**
**B1**

(12) **EUROPÄISCHE PATENTSCHRIFT**

(45) Veröffentlichungstag der Patentschrift:
05.07.89

(21) Anmeldenummer: 86111397.5

(22) Anmeldetag: 18.08.86

(51) Int. Cl.⁴: **G21C 19/06, F16B 21/16,**
**F16B 9/02**

(54) Lagergestell für längliche Brennelemente von Kernreaktoren.

(30) Priorität: 30.08.85 DE 3531093

(43) Veröffentlichungstag der Anmeldung:
15.04.87 Patentblatt 87/16

(45) Bekanntmachung des Hinweises auf die Patenterteilung:
05.07.89 Patentblatt 89/27

(84) Benannte Vertragsstaaten:
CH DE FR LI

(56) Entgegenhaltungen:
EP-A- 0 075 793
EP-A- 0 145 528
DE-A- 2 629 938
DE-A- 3 210 968
FR-A- 2 120 424
US-A- 1 981 541

(73) Patentinhaber: **Siemens Aktiengesellschaft Berlin und München, Wittelsbacherplatz 2, D-8000 München 2(DE)**

(72) Erfinder: **Hänle, Gerhard, Dipl.-Ing., Forststrasse 6, D-6053 Obertshausen 2(DE)**
Erfinder: **Cvancar, Horst, Talstrasse 18, D-6057 Dietzenbach(DE)**

ACTORUM AG

## Beschreibung

Die Erfindung betrifft ein Lagergestell für längliche Brennelemente von Kernreaktoren, mit einer Grundplatte, auf der einzelne Brennelemente einschließende, vertikal verlaufende Hüllen aus absorbierendem Material aufsitzen, die mit im Inneren der Hüllen gelegenen, an der Grundplatte befestigten Zentrierbolzen in horizontaler Richtung festgelegt sind.

Bei dem aus der DE-C 26 29 938 bekannten Lagergestell der obengenannten Art trägt die Grundplatte ein Profilgitter, an dem der obere Rahmen in Form einer sogenannten Kopfplatte befestigt ist. Die Kopfplatte gibt mit einem quadratischen Raster die Positionen der Brennelemente vor, die in dem Gestell gelagert werden sollen. An diesen Positionen sind Hüllen aus Borstahl vorgesehen, die mit an der Grundplatte verschraubten Zentrierbolzen seitlich fixiert sind. Die vertikale Festlegung erfolgt durch an der Kopfplatte angeschraubte Halteklötze, die über die Umrisse der Hüllen greifen. Dabei ist ein erhebliches Spiel vorgesehen, um Wärmedehnungen der 4,80 m langen Hüllen aufnehmen zu können.

Die Erfindung geht von der Aufgabe aus, die Konstruktion eines solchen Lagergestells zu vereinfachen. Insbesondere soll die vertikale Festlegung der Hüllen so verbessert werden, daß man mit weniger Spiel auskommen kann.

Erfindungsgemäß ist vorgesehen, daß die Zentrierbolzen Ausnehmungen aufweisen, in die durch Löcher der Hüllen ragende Haltestäbe zur Festlegung der Hüllen in vertikaler Richtung eingreifen.

Bei der Erfindung werden die Hüllen mit den Zentrierbolzen nicht nur in seitlicher Richtung geführt sondern auch in vertikaler Richtung festgelegt. Die von dieser Befestigung erfaßte Länge der Hüllen beträgt nur wenige Zentimeter, so daß Wärmedehnungen dort keine Rolle spielen. Die beim Bekannten an der Kopfplatte vorgesehenen Halteklötze können entfallen.

Die Haltestäbe können vorteilhaft durch Löcher in gegenüberliegenden Seiten der Hüllen ragen, weil dadurch eine symmetrische Befestigung mit kleinen Biegemomenten erhalten wird.

Als Ausnehmungen sind insbesondere Ringnuten in rotationssymmetrischen Zentrierbolzen gut geeignet, weil es dann auf die Winkellage der Zentrierbolzen nicht ankommt. Vorzugsweise haben die Ringnuten einen halbkreisförmigen Querschnitt, der eine Selbstzentrierung der Haltestäbe ermöglicht. Es ist aber auch möglich, die Haltestäbe in Bohrungen der Zentrierbolzen festzulegen, insbesondere dann, wenn die Zentrierbolzen einen eckigen Querschnitt haben.

Eine besonders stabile Ausführungsform des erfindungsgemäßen Lagergestells ist so ausgebildet, daß die Haltestäbe U-förmig ausgebildet sind und daß der Steg des U außerhalb der jeweiligen Hülle liegt. Die Haltestäbe können dann z.B. als Federklammer wirken, die sich an den Zentrierbolzen oder an der Hülle festklemmt. Man kann aber auch den Steg derartiger U-förmiger Haltestäbe an der Hülle mit einem besonderen Halteglied befestigen, das zum Beispiel in einen Durchbruch der Hülle ragt. Dabei können die beiden Schenkel eines U-förmigen Halte stabes auch mit verschiedenen Zentrierbolzen zusammenwirken.

Zur näheren Erläuterung der Erfindung wird anhand der Zeichnung ein Ausführungsbeispiel beschrieben. Dabei zeigt:

Fig. 1 eine Hülle für ein Lagergestell der Erfindung in perspektivischer Darstellung,

Fig. 2 den unteren Teil eines Lagergestells nach der Erfindung, zum Teil im Schnitt,

Fig. 3 die Draufsicht eines Lagergestelles nach der Erfindung im Schnitt.

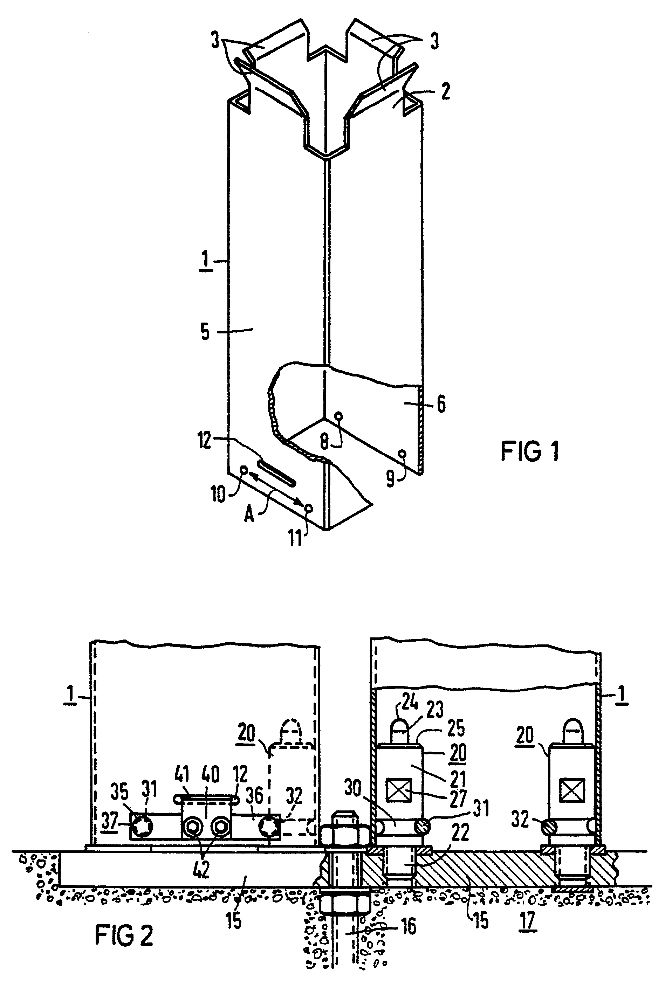

Die in Fig. 1 dargestellte Hülle 1 ist ein Blechschacht aus Borstahl, der als Blech mit einer Wanddicke von 3 mm verarbeitet ist. Der für die Neutronenabsorbtion wesentliche Borgehalt liegt zum Beispiel bei 1,75 %. Der Querschnitt der Hülle 1 ist quadratisch mit 23,6 cm Innen-Kantenlänge. Die Höhe der Hülle beträgt ca. 4,9 m einschließlich der am oberen Ende vorgesehenen Lappen 2 mit ihren nach außen aufgewölbten Enden 3.

Am unteren Ende der Hülle 1 sind in den sich gegenüberliegenden Wänden 5 und 6 des quadratischen Querschnitts Löcher 8, 9, 10 und 11 mit Kreisquerschnitt mit z.B. 12,5 Millimeter Durchmesser vorgesehen. Der Abstand A der Löcher beträgt zum Beispiel 14,8 cm. Zusätzlich ist in der Wand 5 oberhalb der Löcher 10 und 11 ein Langloch 12 mit abgerundeten Enden als Durchbruch angebracht.

Die Fig. 2 zeigt den erfindungsgemäßen Aufbau eines Lagergestells mit zwei benachbarten Hüllen 1, von denen die rechtsgelegene Hülle 1 zum Teil im Schnitt dargestellt ist. Man erkennt die aus Stahl bestehende Bodenplatte 15, die mit Gewindebolzen 16 im Beton 17 eines Lagergebäudes verankert ist. An der Grundplatte 15 sind in das Innere der Hüllen 1 ragende Zentrierbolzen 20 befestigt.

Die Zentrierbolzen 20 umfassen einen zylindrischen Teil 21, an dessen unterem Ende ein Gewindezapfen 22 vorgesehen ist, und einen oberen Dorn 23, der eine gerundete Spitze 24 hat. Der im Durchmesser gegenüber dem Zylinder 21 nur etwa ein Drittel so große Dorn 23 dient zur horizontalen Zentrierung des in die Hülle 1 eingesetzten Brennelements, das auf einer dem Dorn 23 umgebenden horizontalen Aufstandsfläche 25, aufsitzt. In dem zylindrischen Teil 21 sind Abflachungen 27 vorgesehen, mit denen die Zentrierbolzen 20 beim Schrauben gehalten werden können.

Am unteren Ende des zylindrischen Teils 21, also in der Nähe der Gewindezapfen 22, ist eine Ausnehmung in Form einer Ringnut 30 vorgesehen. Die Ringnut 30 hat einen halbkreisförmigen Querschnitt mit 6,25 mm Radius. In die Ringnuten 30 der Gewindebolzen 20 greifen zwei Haltestäbe 31 und 32 ein, die aus nicht rostendem Stahl bestehen und einen Kreisquerschnitt von 12 mm Durchmesser haben. Die Haltestäbe 31 und 32 verlaufen parallel zueinander durch die Löcher 8 bis 11. Sie greifen dabei in Ausnehmungen der vier in einer Hülle 1 vorgesehenen Zentrierbolzen 20, die zu viert in den Ecken des quadratischen Querschnitts der Hülle 1 angeordnet sind.

Die linke Seite der Fig.2 läßt erkennen, daß die Haltestäbe 31 und 32 außerhalb der Hülle 1 mit einem verdickten Bund 35 in ein Stegblech 36 gesteckt und mittels einer Schweißnaht befestigt sind. Das Stegblech 36 faßt die beiden Haltestäbe 31, 32 zu einem U-förmigen Bügel 37 zusammen. In der Mitte zwischen den Haltestäben 31 und 32 ist an dem Steg 36 ein Halteblech 40 angeschraubt, das mit seinem abgewinkelten Schenkel 41 in den Durchbruch 12 greift. Die Schrauben 42 sitzen dabei in Gewindebohrungen des Stegbleches 36.

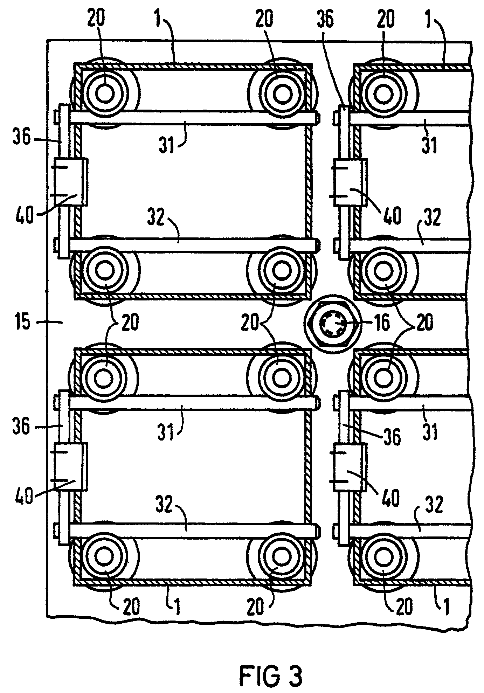

Die Fig.3 zeigt die Länge der Haltestäbe 31 und 32 im Zusammenwirken mit der Hülle 1 und den Zentrierbolzen 20 sowie des Haltebleches 40 mit der Hülle 1 und des Stegbleches 36.

Das Ausführungsbeispiel läßt erkennen, daß mit der Erfindung eine einfache Befestigung der Hüllen 1 gelingt, die als zusätzliche Befestigungsmittel nur die Haltestäbe 31 und 32 erfordert, die in Form der U-förmigen Klammer zusammengefaßt sind und so gemeinsam hantiert werden können. Sie lassen sich deshalb auch gut durch Fernbedienung montieren und demontieren. Dennoch ist die Befestigung wegen des symmetrischen und großflächigen Angriffs an die Hülle 1 und an den Zentrierbolzen 20 auch großen Kräften gewachsen.

## Patentansprüche

1. Lagergestell für längliche Brennelemente von Kernreaktoren, mit einer Grundplatte (15), auf der einzelne Brennelemente einschließende, vertikal verlaufende Hüllen (1) aus absorbierendem Material aufsitzen, die mit im Inneren der Hüllen gelegenen, an der Grundplatte befestigten Zentrierbolzen (20) in horizontaler Richtung festgelegt sind, **dadurch gekennzeichnet**, daß die Zentrierbolzen (20) Ausnehmungen (30) aufweisen, in die durch Löcher (8-11) der Hüllen (1) ragende Haltestäbe (31,32) zur Festlegung der Hüllen (1) in vertikaler Richtung eingreifen.

2. Lagergestell nach Anspruch 1, **dadurch gekennzeichnet**, daß die Haltestäbe (31,32) durch Löcher (8-11) in gegenüberliegenden Seiten (5,6) der Hüllen (1) ragen.

3. Lagergestell nach Anspruch 1 oder 2, **dadurch gekennzeichnet**, daß die Ausnehmungen vorzugsweise halbkreisförmige Ringnuten (30) in rotationssymmetrischen Zentrierbolzen (20) sind.

4. Lagergestell nach Anspruch 1, 2 oder 3, **dadurch gekennzeichnet**, daß die Haltestäbe (31,32) U-förmig ausgebildet sind und daß der Steg (36) des U außerhalb der jeweiligen Hülle (1) liegt.

5. Lagergestell nach Anspruch 4, **dadurch gekennzeichnet**, daß der Steg (36) an der Hülle (1) befestigt ist.

6. Lagergestell nach Anspruch 5, **dadurch gekennzeichnet**, daß der Steg (36) mit einem Halteglied (40) befestigt ist, das in einen Durchbruch (12) der Hülle (1) ragt.

7. Lagergestell nach Anspruch 4, 5 oder 6, **dadurch gekennzeichnet**, daß die beiden Schenkel (31,32) eines U-förmigen Haltestabes (37) mit verschiedenen Zentrierbolzen (20) zusammenwirken.

## Claims

1. Rack for oblong nuclear-reactor fuel elements, having a base plate (15) on which are arranged vertically extending casings (1) of absorbent material which enclose individual fuel elements, these casings being secured in the horizontal direction with centring pins (20) placed inside the casings and fixed on the base plate, characterised in that the centring pins (20) have recesses (30) into which engage holding rods (31, 32), projecting through apertures (8-11) in the casings (1), for securing the casings (1) in the vertical direction.

2. Rack according to claim 1, characterised in that the holding rods (31, 32) project through apertures (8-11) in opposite sides (5, 6) of the casings (1).

3. Rack according to claim 1 or 2, characterised in that the recesses are preferably semi-circular annular grooves (30) in axially symmetrical centring pins (20).

4. Rack according to claim 1, 2 or 3, characterised in that the holding rods (31, 32) are U-shaped and in that the crosspiece (36) of the U lies outside the respective casing (1).

5. Rack according to claim 4, characterised in that the crosspiece (36) is secured on the casing (1).

6. Rack according to claim 5, characterised in that the crosspiece (36) is secured with a retaining member (40) which projects into an opening (12) in the casing (1).

7. Rack according to claim 4, 5 or 6, characterised in that the two arms (31, 32) of a U-shaped holding rod (37) co-operate with different centring pins (20).

## Revendications

1. Râtelier de stockage d'assemblages combustibles oblongs de réacteurs nucléaires, comprenant une plaque de base (15), sur laquelle reposent des enveloppes (1) en matière absorbante, qui s'étendent verticalement, qui enferment des assemblages combustibles et qui sont immobilisées, dans la direction horizontale, par des boulons de centrage (20) fixés à la plaque de base et disposés à l'intérieur des enveloppes, caractérisé en ce que les boulons de centrage (20) comportent des évidements (30) dans lesquels pénètrent, en passant par des trous (8 à 11) ménagés dans les enveloppes (1), des barres de maintien (31, 32) destinées à immobiliser les enveloppes (1) dans la direction verticale.

2. Râtelier de stockage suivant la revendication 1, caractérisé en ce que les barres de maintien (31, 32) passent dans des trous (8 à 11) ménagés dans des côtés opposés (5, 6) des enveloppes (1).

3. Râtelier de stockage suivant la revendication 1 ou 2, caractérisé en ce que les évidements sont des gorges annulaires (30), de préférence hémicirculaires, ménagées dans des boulons de centrage (20) de révolution.

4. Râtelier de stockage suivant la revendication 1, 2 ou 3, caractérisé en ce que les varres de maintien (31, 32) sont en forme de U et en ce que l'âme (36) du U est à l'extérieur de l'enveloppe (1).

5. Râtelier de stockage suivant la revendication 4, caractérisé en ce que l'âme (36) est fixée à l'enveloppe (1).

6. Râtelier de stockage suivant la revendication 5, caractérisé en ce que l'âme (36) est fixée par un élément de fixation (40) qui passe dans un perçage (12) ménagé dans l'enveloppe (1).

7. Râtelier de stockage suivant la revendication 4, 5 ou 6, caractérisé en ce que les deux branches (31, 32) d'une barre de maintien (37) en forme de U coopèrent avec de boulons de centrage (20) différents.

FIG 1

FIG 2

FIG 3